# EUROPEAN PATENT APPLICATION

(11) **EP 4 848 105 A1**
(43) Date of publication of application: **02.12.2026**
(21) Application number: 24919805.2
(22) Date of filing: 16.10.2024
(51) Int. Cl.: G06F 16/44

(54) **METHOD AND APPARATUS FOR TAGGING MEDIA ITEMS, AND DEVICE AND STORAGE MEDIUM**

(30) Priority: 23.01.2024 CN 202410096348
(71) Applicant: Beijing Zitiao Network Technology Co., Ltd., Beijing 100190 (CN)
(72) Inventor: SUN, Ping, Beijing 100028 (CN); ZHAO, Yongzhi, Beijing 100028 (CN)
(74) Representative: Grünecker Patent- und Rechtsanwälte PartG mbB
(86) International application number: PCT/CN2024/125379
(87) International publication number: WO 2025/156725

(57) **Abstract**

According to embodiments of the disclosure, a method, an apparatus, a device, and a storage medium for marking a media item are provided. The method includes: presenting the media item in a presentation page; marking the media item as a target type in response to detecting a first interaction operation in the presentation page; and providing a guidance identification in the presentation page, the guidance identification indicating an entry control for accessing the media item. Therefore, the media item can be conveniently and quickly marked and related guidance information can also be provided, which helps to improve the efficiency of the user when performing an interaction, and the user is supported to find the marked media item faster.

## Description

This application claims the priority of Chinese Patent Application No. 202410096348.9, filed on Jan. 23, 2024, entitled "METHOD, APPARATUS, DEVICE AND STORAGE MEDIUM FOR MARKING MEDIA ITEM", the entire content of which is incorporated herein by reference.

### FIELD

Example embodiments of the present disclosure generally relate to the field of computers, and in particular, to a method, an apparatus, a device, and a computer-readable storage medium for marking a media item.

### BACKGROUND

Currently, a growing number of applications are designed to provide users with various services. For example, users can publish, browse, and view media items in the application. Media items may include various types of content such as videos, images, image sets, texts, audios, etc. Users may also perform any appropriate type of operation on media items in the application, such as liking, favoriting, commenting on media items, and so on.

### SUMMARY

In a first aspect of the present disclosure, a method for marking a media item is provided. The method includes: presenting the media item in a presentation page; marking the media item as a target type in response to detecting a first interaction operation in the presentation page; and providing a guidance identification in the presentation page, the guidance identification indicating an entry control for accessing the media item.

In a second aspect of the present disclosure, an apparatus for marking a media item is provided. The apparatus includes: a media item presenting module configured to present the media item in a presentation page; a media item marking module configured to mark the media item as a target type in response to detecting a first interaction operation in the presentation page; and an identification providing module configured to provide a guidance identification in the presentation page, the guidance identification indicating an entry control for accessing the media item.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, causes the device to perform the method of the first aspect.

In a fourth aspect of the present disclosure, a computer-readable storage medium is provided. The computer-readable storage medium has a computer program stored thereon. The computer program is executable by a processor to implement the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments of the present disclosure can be implemented;
FIGS. 2A-2R illustrate schematic diagrams of example pages according to some embodiments of the present disclosure;
FIG. 3 illustrates a flowchart of a process for marking a media item according to some embodiments of the present disclosure;
FIG. 4 illustrates a block diagram of an apparatus for marking a media item according to some embodiments of the present disclosure; and
FIG. 5 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "comprising/including" and its equivalents should be construed as being open-ended inclusive, i.e., "including, but not limited to". The term "based on" should be construed as "based at least in part on". The terms "one embodiment" or "the embodiment" should be construed as "at least one embodiment". The term "some embodiments" should be understood as "at least some embodiments". Other definitions, either explicit or implicit, may also be included below.

Herein, unless explicitly stated, performing one step "in responding to A" does not imply that this step is performed immediately after "A", but one or more intermediate steps may be included.

It should be understood that the data involved in the technical solution (including but not limited to the data itself, the acquisition or use of the data) should comply with the requirements of the corresponding laws and regulations and related provisions.

It should be understood that before using the technical solutions disclosed in the implementations of the present disclosure, the user should be informed of the types, use ranges, use scenarios, and the like of the personal information related to the present disclosure in an appropriate manner according to relevant laws and regulations and acquire the user's authorization.

For example, in response to receiving an active request from a user, prompt information is sent to the user to explicitly prompt the user that the requested operations to be performed would require acquisition and use of personal information of the user. Thus, the user can autonomously select whether to provide personal information to software or hardware such as an electronic device, an application, a server, or a storage medium that performs the operations of the technical solution of the present disclosure, according to the prompt information.

As an optional but non-limiting embodiment, in response to receiving an active request from a user, the prompt information may be sent to the user, for example, in the form of a pop-up window in which the prompt information is presented in the form of text. In addition, the pop-up window may further carry a selection control for the user to select "agree" or "disagree" to provide personal information to the electronic device.

It should be understood that the above process for notifying and acquiring user authorization is merely illustrative, and does not limit the embodiments of the present disclosure, and other manners that satisfy related laws and regulations may also be applied to the embodiments of the present disclosure.

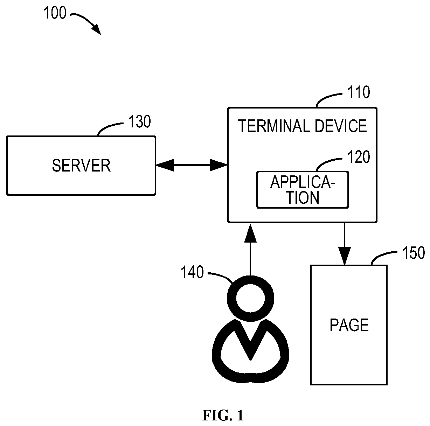

FIG. 1 illustrates a schematic diagram of an example environment 100 in which embodiments of the present disclosure can be implemented. In this example environment 100, an application 120 is installed in the terminal device 110. The user 140 may interact with the application 120 via the terminal device 110 and/or an attachment device of the terminal device 110.

In some embodiments, the application 120 may be a content sharing application (for example, a video application focusing on video sharing). The application 120 can provide various services related to media items (which may also be referred to as media content items, content items, etc.) to the user 140, including browsing, commenting, forwarding, creating (e.g., shooting and/or editing), publishing of media items, and the like. In some embodiments, the application 120 may also be any other suitable application, where a media item can be presented. Herein, each "media item" includes one or more types of content, such as video, images, GIFs, image sets, audio, text, and the like.

In environment 100 of FIG. 1, terminal device 110 may present page 150 of application 120 if application 120 is active. The page 150 may include various pages that the application 120 can provide, such as a media item presentation page, a media item authoring page, a media item publication page, a message page, a personal main page, and so forth. The application 120 may provide a media item viewing function to view various media items published in the application 120.

In some embodiments, terminal device 110 communicates with server 130 to enable provisioning of services to application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of page for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Traditionally, if a user desires to subsequently access a certain media item again, the user may like or favorite the media item and subsequently access the media item later through a personal favorites page or likes page. However, this makes it impossible to distinguish between a media item that a user desires to access again and a media item that a user truly desires to like or favorite. In the case where a user has liked or favorited a large number of media items, there is a case that not every liked or favorited media item is one the user desires to access again. This may result in that the user still needs to search through a large number of media items to find the media item they wish to access again. This may affect the efficiency of the user browsing such media items (i.e., media items that are desired to be accessed again subsequently), resulting in the user needing to spend a significant amount of time and effort performing searching.

According to the embodiments of the present disclosure, a solution for marking a media item is provided. Specifically, the media item is presented in a presentation page. The media item is marked as a target type in response to detecting a first interaction operation in the presentation page; and a guidance identification is provided in the presentation page. The guidance identification indicates an entry control for accessing the media item. In this way, a corresponding media item may be marked as a target type by a first interaction operation in a presentation page for presenting a media item. The target type herein may be, for example, any of a "like" type, a "favorite" type, and a "view later" type. The "view later" type represents that the user desires to access the media item again within a certain period of time in the future. In this way, different types of media items may be distinguished.

Further, the guidance identification may also be presented in the presentation page. The guidance identification may indicate an entry control for accessing a media item marked as a target type. Therefore, the media item can be conveniently and quickly marked and related guidance information can also be provided, which helps to improve the efficiency of the user when performing an interaction.

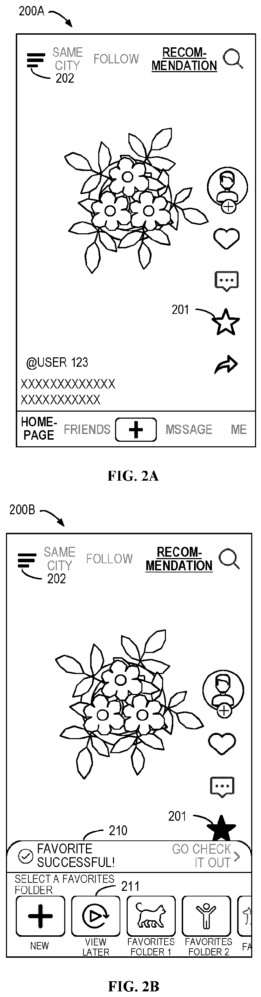

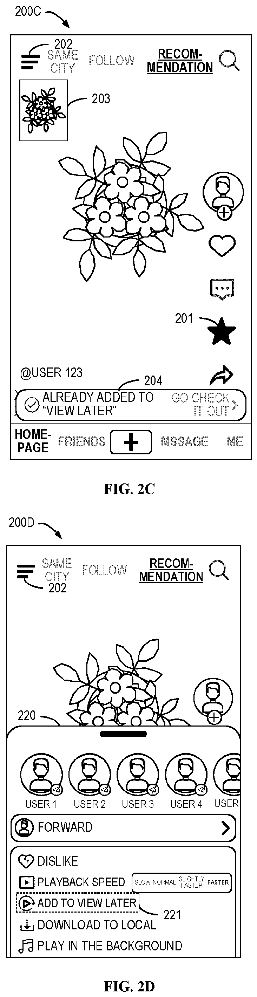

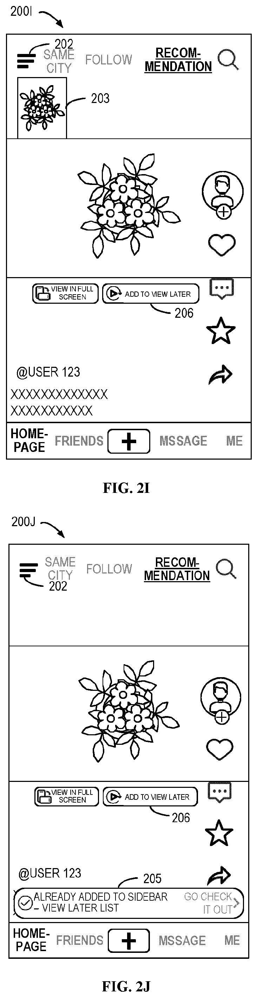

Some example embodiments of the present disclosure will be described below with continued reference to the accompanying drawings. FIG. 2A-FIG. 2R illustrate schematic diagrams of example page 200A-example page 200R (which may also be referred to simply as example 200A-example 200R), according to some embodiments of the present disclosure. It should be understood that the pages illustrated in the drawings are merely examples, and various page designs may actually exist. Respective graphical elements in pages may have different arrangements and different visual representations, where one or more elements may be omitted or replaced, and one or more other elements may also exist. Embodiments of the present disclosure are not limited in this respect. The pages illustrated in example 200A-example200R may be presented at terminal device 110. For ease of discussion, example 200A-example 200R will be described with reference to the environment 100 of FIG. 1.

In the environment 100, the terminal device 110 presents a page 150 of the application 120. In some cases, the page 150 presented by the terminal device 110 may be a specific presentation page of the application 120. A media item may be presented in the presentation page. The presentation page may also be referred to as a media item presentation page, a media item display page, a content presentation page, or the like. In some embodiments, the presentation page refers to a page for presenting or pushing media items and other related information to a user. The media items that can be presented in the presentation page may include various types of media items. A media items to be presented in this presentation page may be determined according to application design requirements, actual scenarios, and the like.

In some embodiments, the presentation page may include a homepage of the application 120, or a recommendation homepage in a set of homepages of the application 120, and so on. The recommendation media item presented to the user in the recommendation homepage is sometimes also referred to as recommendation information flows. In some embodiments, the presentation page may include other pages under the homepage of the application 120, such as a follow page (where media items published by a set of users followed by a current user are presented), a same city page (where media items published by other users with a same range of region with a current user are presented), or media items that are otherwise clustered or classified, and so forth.

When there is a large amount of complex information that needs to be presented in the application, the information is often presented in classes, thereby facilitating the user to obtain information in a more concise manner. Presenting information in classes usually requires setting a plurality of navigation tags corresponding to different information on a page. The user may obtain a page corresponding to a tag by switching different navigation tags. In some embodiments, navigation tags for navigating to different pages may be provided in the application 120. In the embodiments of the present disclosure, a certain page (including a presentation page), may be presented at least by selecting a predetermined navigation tag. That is, a predetermined navigation tag in the application can be configured to navigate to a presentation page.

As shown in FIG. 2A, example 200A illustrates one example of a presentation page. A plurality of navigation tags for navigating to various pages are provided at a current page of the application 120, such as "same city," "follow," "recommendation," "homepage," "friends," and the like. The plurality of navigation tags may also have different levels, for example, the navigation tag "homepage", "friends", etc. may be a first level, the navigation tag "same city", "follow", and "recommendation" may be a second level. For example, navigation tags of the first level may correspond to a set of pages (for example, a set of homepages), and navigation tags of the second level may be, for example, at least one of a set of pages corresponding to a navigation tag of the first level (for example, a recommendation homepage corresponding to the navigation tag "recommendation" is one of a set of homepages corresponding to the navigation tag "homepage").

In the example 200A shown in FIG. 2A, if the terminal device 110 detects a selection operation for the navigation tag "homepage", the homepage of the application 120 may be presented. For example, the terminal device 110 may default to present a recommendation homepage (that is, a page corresponding to the navigation tag "recommendation") of a plurality of homepages. On this basis, if the terminal device 110 detects a selection operation for the navigation tag "follow", the terminal device 110 may switch to presenting a follow homepage (that is, a page corresponding to the navigation tag "follow") of a plurality of homepages. It should be understood that this is merely illustrative and not intended to limit the solution of the present disclosure. In some embodiments, alternatively or additionally, a presentation page may also be presented by detecting a launch operation of the application. For example, the presentation page is a default page that is presented when the application is launched. Upon the application being launched, a media item may be presented in the presentation page.

The presentation page is at least for presenting media items. In some embodiments, the terminal device 110 may present a media item in any suitable view mode (e.g., single-column view mode, dual-column-view mode, three-column view mode, etc. ) in the presentation page. For example, in Example 200A, the terminal device 110 presents a media item in single-column view mode.

The terminal device 110 marks a media item (that is, the media item currently presented in the example 200A) as a target type in response to detecting a first interaction operation in a presentation page (for example, the example 200A). The target type herein may be any suitable type. For example, the target type may be a type that the user likes, a type of the user's favorite, a type that the user desires to access again, and the like. In some embodiments, the target type represents that the user who performs the first interaction operation desires to access a media item again. That is, the target type indicates a type that the media item is marked as desired to be accessed again by the user.

Regarding the first interaction operation, in some embodiments, a first interaction operation may be an interaction operation for a control in the presentation page. In this case, the first interaction operation may include a click operation and/or a drag operation associated with a predetermined region in the control. The control herein may include any suitable type of control, for example may include a floating menu and/or a floating window. Alternatively and/or additionally, the control may include a control presented at a certain position in the page. The control here may be always presented in the presentation page, or may be presented in the presentation page in response to a specific operation. In some embodiments, the control may be presented in the presentation page in response to detecting a second interaction operation in the presentation page. The second interaction operation here may include, for example, a long-press operation in the presentation page, a click operation for a predetermined control in the presentation page, and a drag operation in the presentation page. The predetermined control herein may be any suitable control, for example, a like control, a favorite control, and the like, which is not limited in the present disclosure.

Alternatively or additionally, in some embodiments, the first interaction operation may also be an interaction operation for a mark control in the presentation page. The mark control here may be configured to mark a media item as a target type. That is, the terminal device 110 may mark a media item as a target type in response to an interaction operation for a mark control. In some embodiments, the mark control may be fixedly presented in the presentation page. In this case, the terminal device 110 may present the mark control in a presentation page for presenting any suitable media item.

In other embodiments, the mark control may also be presented in response to determining that a length of time of a media item satisfies a predetermined threshold. The predetermined threshold here may be, for example, predetermined by a user (including the user 140 and related staff of the application 120), or determined by the terminal device 110 itself. In this case, the terminal device 110 may further determine a length of time of a media item (that is, a play duration of a media item), and only present the mark control in the presentation page for presenting a media item whose corresponding length of time meets the predetermined threshold.

For example, if the predetermined threshold corresponding to the length of time is 1 minute, the terminal device 110 can obtain the length of time of the media item to be presented in the presentation page in advance. If the length of time of the media item is greater than or equal to 1 minute (for example, maybe, 1 minute and 30 seconds, 2 minutes, 3 minutes, etc.), the terminal device 110 may present a marking control in the presentation page in response to the media item being presented in the presentation page. Alternatively and/or additionally, the mark control may be presented at the bottom (or other positions) of the media item presented in landscape orientation.

After the media item is marked as the target type, the terminal device 110 provides a guidance identification in the presentation page. The guidance identification indicates an entry control for accessing the media item. The guidance identification here may include an image representation of the media item, and/or an indicator indicating the entry control. The image representation here may be a thumbnail of the cover image of the media item, a thumbnail of an image when the media item is marked as the target type, or any other appropriate image representation (such as a GIF, etc.). For example, If a media item in the example page is marked as the target type when it is played to the XX-th second, the image representation of the media item provided by the terminal device 110 in the presentation page may be a thumbnail of the cover image of the media item, or a thumbnail of a frame of image corresponding to the XX-th second of the media item. The indicator herein may include any suitable type of indicator, such as an arrow pointing to the entry control, a flashing frame around the entry control, and the like.

Regarding the specific manner of providing the guidance identification, in some embodiments, the terminal device 110 may present the guidance identification based on a predetermined path in the presentation page. An end position of the predetermined path corresponds to the entry control. For example, if the entry control is presented in the upper left corner of the presentation page, the predetermined path may be a path from the lower right corner the presentation page to the upper left corner of the presentation page. The terminal device 110 may present the guidance identification in the presentation page based on a path from the lower right corner to the upper left corner.

In some embodiments, in addition to providing the guidance identification, the terminal device 110 may also provide feedback configured to indicate that the media item is marked as the target type. The feedback here may include, for example, any suitable type of feedback, such as visual feedback, auditory feedback, haptic feedback, and the like. Regarding to the specific manner of providing feedback, the terminal device 110 may provide visual feedback, for example, by presenting information such as text (e.g., "already added to a 'view later' list, etc.), an image, etc., in the presentation page. The terminal device 110 may also provide visual feedback, for example, by flashing a screen, highlighting the entry control, or the like. The terminal device 110 may provide audible feedback, for example, by playing a predetermined audio. The terminal device 110 may also provide haptic feedback in a vibration manner.

It should be noted that the guidance identification and the feedback may be simultaneously presented in the presentation page, or may be presented in the presentation page successively. For example, the terminal device 110 may first provide the guidance identification, and stop displaying the guide identification after a first predetermined duration. The terminal device 110 may further present the feedback in the presentation page in response to the guidance identification being stopped displaying. In some embodiments, the terminal device 110 may further provide only one of the guidance identification or the feedback. That is, only the guidance identification is provided, or only the feedback is provided.

An example embodiment is described below with reference to FIG. 2A to FIG. 2C. At this time, a second interaction operation is a click operation for a predetermined control in the presentation page, and a first interaction operation is a click operation associated with a predetermined region in the control. Example 200A-example 200C illustrate a plurality of example pages of the presentation page. A favorite control 201 may be included in example 200A. In some embodiments, the favorite control 201 is a predetermined control in example 200A. The terminal device 110 may present the floating menu 210 shown in the example 200B in response to receiving a click operation for the favorite control 201. In some embodiments, the terminal device 110 may further adjust a presentation style of the favorite control 201 in response to receiving a click operation for the favorite control 201. For example, if the terminal device 110 presents the favorite control 201 in a first color in example 200A, the favorite control 201 needs to be presented in other colors different from the first color in example 200B.

The floating menu 210 may include a region 211 (which may also be referred to as a control 211, an option 211, etc.). The terminal device 110 may determine that the first interaction operation is received in response to receiving a click operation for the region 211. The terminal device 110 may further mark, in response to receiving a first interaction operation, a currently presented media item in the presentation page (that is, the media item presented in example 200A) as a target type (at this time, the media item is marked as a "view later" type). For example, the terminal device 110 may present, in response to a media item being marked as a target type, a presentation page as shown in example 200C. In example 200C, the terminal device 110 may provide a guidance identification 203. The guidance identification 203 may indicate an entry control 202 for accessing the media item marked as the target type. The terminal device 110 may, for example, present the guidance identification 203 in an animated manner based on a predetermined path as previously described. The terminal device 110 may further provide feedback 204 configured to indicate that the media item is marked as the target type in example 200C. The guidance identification 203 and the feedback 204 may be presented simultaneously in example 200C. Alternatively and/or additionally, only the guidance identification 203 may be presented. In this way, the user may be informed of an entry for accessing the marked media item, thereby facilitating the user to find the marked media item faster.

An example embodiment is described below with reference to FIG. 2A and FIG. 2D to FIG. 2F. At this time, a second interaction operation is a long-press operation in the presentation page, and a first interaction operation is a click operation associated with a predetermined region in the control. Example 200D to example 200F also illustrate a plurality of example pages of the presentation page. In some embodiments, the terminal device 110 may also present the floating menu 220 shown in example 200D in response to a long-press operation for example 200A (e.g., a long-press operation for a blank region). The floating menu 220 may include a region 221 (which may also be referred to as a control 221, an option 221, etc.). The terminal device 110 may determine that the first interaction operation is received in response to receiving a click operation for the region 221. The terminal device 110 may further mark, in response to receiving the first interaction operation, a currently presented media item in the presentation page (that is, the media item presented in example 200A) as a target type. For example, the terminal device 110 may present, in response to the media item being marked as a target type, a presentation page as shown in example 200E.

In example 200E, the terminal device 110 may provide guidance identification 203. The guidance identification 203 may indicate an entry control 202 for accessing media items marked as a target type. The terminal device 110 may present the guidance identification 203, for example, based on a predetermined path as described above. For example, the terminal device 110 may stop presenting the guidance identification 203 in response to the guide identification 203 reaching an end position of the predetermined path. The terminal device 110 may further present, in response to the guide identification 203 being stopped presented, a presentation page shown in example 200F. The terminal device 110 may provide feedback 205 configured to indicate that the media item is marked as a target type in example 200F. In some embodiments, the terminal device 110 may also present only the guidance identification 203 or only the feedback 205 (i.e., only example 200E or only example 200F is presented) in response to the media item being marked as the target type.

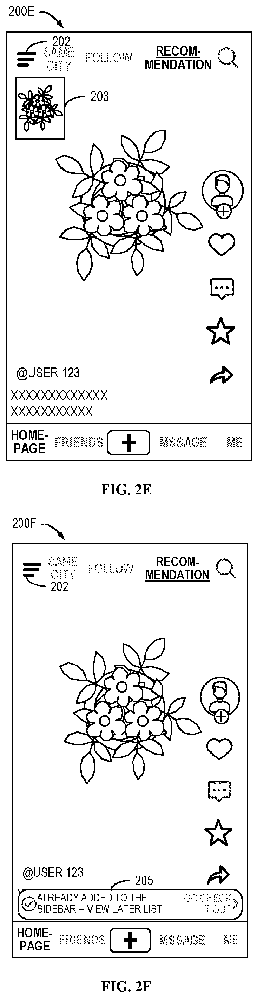

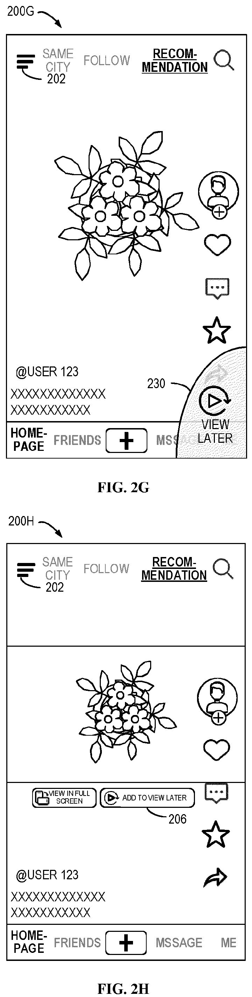

An example embodiment is described below with reference to FIG. 2A, FIG. 2G, FIG. 2E, and FIG. 2F. At this time, a second interaction operation is a drag operation in the presentation page, and a first interaction operation is a drag operation associated with a predetermined region in the control. Example 200G also illustrates an example page of the presentation page. In some embodiments, the terminal device 110 may further present the floating window 230 shown in example 200G in response to a drag operation (e.g., drag to the right or to other directions) for a media item in example 200A. The terminal device 110, for example, may determine that a drag operation indicating that the media item is dragged to the floating window 230 is received in response to a stop position of the drag operation being the floating window 230 (as the position in example 200G). The terminal device 110 may determine that a first interaction operation is received in response to receiving a drag operation indicating that the media item is dragged to the floating window 230. The terminal device 110 may further present the presentation page shown in example 200E and/or example 200F in response to receiving the first interaction operation. As a detailed description has been provided earlier, it will not be repeated here.

It should be noted that the drag operation and the dragging operation here can be continuous operations. For example, the terminal device 110 may further present the floating window 230 shown in example 200G in response to a drag operation for a media item. If the drag operation does not end during this process (that is, the user's finger does not leave the touchscreen of the terminal device 110), after the floating window 230 is presented, the terminal device 110 may, in response to the stopping position of the drag operation being the position of the floating window 230 in Example 200G, determine that a dragging operation (that is, the drag operation does not stop throughout the process, and the terminal device 110 only regards a drag operation after the floating window 230 is presented as a dragging operation for the media item)indicating the media item being dragged to the floating window 230 is received. In other words, the user's drag operation can trigger the presentation of a floating window. The user's finger may not leave the touchscreen and continue performing a dragging operation to drag the current media item to the floating window.

For another example, the terminal device 110 may further present the floating window 230 shown in example 200G in response to a drag operation for example 200A. The floating window 230 may be fixedly presented in the presentation page within a predetermined duration. The user may stop the drag operation for the presentation page. The terminal device 110 may receive a drag operation for the media item again. That is, a drag operation and a dragging operation may be respectively received. In this way, the user may be supported to mark a media item in a more flexible and diverse action. Even if a brief pause occurs during the drag process, a media item may still be marked as a desired target type.

The following describes example embodiments in which the first interaction operation is an interaction operation for a mark control in the presentation page with reference to FIG. 2H to FIG. 2J. Example 200H - example 200J also illustrate a plurality of example pages of the presentation page. In the case that a length of time of a media item meets the predetermined threshold, the terminal device 110 may present a presentation page shown in example 200H. The example 200H may include a marking control 206. In general, a user may only have a "view later" demand for long videos. In this way, user's operations may be facilitated. Further, the mark control 206 may be presented at the bottom (or other positions) of the media item presented in landscape manner. In this way, the mark control 206 may be provided directly to the user without obscuring content of the media item, thereby reducing the complexity of user operation.

The terminal device 110 may determine, in response to receiving an interaction operation for a mark control, that a first interaction operation is received. The interaction operation for the mark control herein may include, for example, a click operation, a long press operation, a double click operation, a slide operation, and the like for the mark control, which is not limited in the present disclosure.

The terminal device 110 may further mark, in response to receiving the first interaction operation, the media item currently presented in the presentation page (that is, the media item presented in the example 200H) as a target type. The terminal device 110 may, for example, present presentation pages as shown in example 200I and/or example 200J in response to the media item being marked as a target type.

For example, in example 200I, the terminal device 110 may provide a guidance identification 203. The guidance identification 203 may indicate an entry control 202 for accessing a media item marked as a target type. The terminal device 110 may present the guidance identification 203, for example, based on a predetermined path as described above. For example, the terminal device 110 may stop presenting the guidance identification 203 in response to the guide identification 203 reaching an end position of the predetermined path. The terminal device 110 may further present, in response to the guide identification 203 being stopped presented, a presentation page shown in example 200J. The terminal device 110 may provide feedback 205 configured to indicate that the media item is marked as a target type in example 200J. In some embodiments, the terminal device 110 may also present only the guidance identification 203 or only the feedback 205 (i.e., only example 200I or only example 200J is presented) in response to the media item being marked as the target type.

Therefore, the terminal device 110 may mark a media item as a target type via the first interaction operation, and after the media item is marked as the target type, provide a guidance identification indicating an entry control for accessing the media item in the presentation page. In this way, it can be intuitively presented to the user that the media item has been marked as the target type, and it can intuitively remind the user of the position of the entry control, thereby facilitating the user to find the marked media item.

In some embodiments, the terminal device 110 may further present, in response to detecting a third interaction operation for an entry control, an access control for accessing at least one media item marked as the target type. For example, the terminal device 110 may present, in response to receiving a third interaction operation for the entry control 202 shown in the example 200A to the example 200J, an access control for accessing the at least one media item marked as the target type. The terminal device 110 may further present, in response to detecting a fourth interaction operation for the access control, an indicator of the at least one media item. The indicator of the media item herein may include, for example, an image representation of the media item, a textual description of the media item, and the like. In this way, the user may be supported to access the marked media item by clicking the indicator.

In some embodiments, the indicator of the at least one media item is presented in chronological order. For example, a media item that is most recently marked as a target type may be preferentially presented. That is, the closer the time distance when a media item is marked as the target type is to the current time, the higher priority it will be given in presentation. In general, users are less likely to an access media item that was marked a long time ago, but rather tend to access a media item that was newly marked. In this way, a media item with a higher access probability may be preferentially presented to the user, thereby reducing the complexity of the user's searching operation.

In some embodiments, the terminal device 110 may further present a management control for managing at least one media item. The management control may include a cancel control for canceling a mark of the target type of a target media item in the at least one media item. The terminal device 110 may cancel a mark of the target type of a target media item in response to receiving a click operation for the cancel control corresponding to the target media item. The management control may also include a cancel control for canceling a mark of the target type of all media items in the at least one media item. The terminal device 110 may cancel a mark of the target type of all media items in the at least one media item in response to receiving a click operation for the cancel control corresponding to all media items. In this case, there will be no media item marked as the target type. The management control may also include a cancel control for canceling a mark of the target type of the target media item that has been played completely in the at least one media item. The terminal device 110 may cancel a mark of the target type of the target media item that has been played completely in response to receiving a click operation for the cancel control corresponding to the target media item that has played completely. In this case, only media items of the target type that have not been played completely are retained.

Regarding the specific manner of presenting the indicator of the at least one media item, in some embodiments, the terminal device 110 may also determine the number of the at least one media item. The terminal device 110 may present, in response to determining that the number of the at least one media item is above a predetermined threshold, a first set of indicators of a first set of media items in the at least one media item. The number of media items in the first set of media items is equal to the predetermined threshold. The predetermined threshold herein may be, for example, predetermined by the user (including the user 140 and related staff of the application 120), or determined by the terminal device 110 itself.

For example, if the predetermined threshold is 10, the terminal device 110 may normally present the indicator of the at least one media item in response to the number of the at least one media item being less than or equal to 10. The terminal device 110 may present, in response to the number of the at least one media item being greater than 10, 10 indicators corresponding to the first 10 media items in the at least one media item (that is, 10 media items whose moments of being marked as the target type are closest to the current moment.). That is, subsequent media items marked at an earlier time may be collapsed. Therefore, it allows the user to preferentially view media items most recently marked, which can improve the efficiency of user interaction.

In some embodiments, the terminal device 110 may also present, in response to detecting a fifth interaction operation for an indicator of a media item located at an end position in the first set of media items, a second set of indicators of a second set of media items after the first set of media items in the at least one media item. Still taking the predetermined threshold as 10 as an example, if the number of the at least one media item is 20, the terminal device 110 may present 10 indicators corresponding to the first 10 media items in the 20 media items. The terminal device 110 may also present, in response to detecting a fifth interaction operation for an indicator of a media item located at an end position in the 10 indicators (i.e., the indicator of the media item that is earliest marked as the target type in the 10 media items), 10 indicators of the other 10 media items in the 20 media items (i.e., the 11-20 media items).

In some embodiments, for a target media item in the at least one media item, the terminal device 110 presents a playing progress of the target media item. The terminal device 110 may, for example, play the target media item based on the playing progress in response to detecting a sixth interaction operation for an indicator of the target media item. For example, the terminal device 110 may present a playing progress of the target media item as "XX: XX/YY: YY". YY: YY herein is a length time of the target media item, and XX: XX herein is a playing progress that the user last plays. The terminal device 110 may start playing the target media item from XX: XX moment in response to detecting a sixth interaction operation for the indicator of the target media item. In this way, the user can be supported to continue to browse a video that has not been viewed completely before.

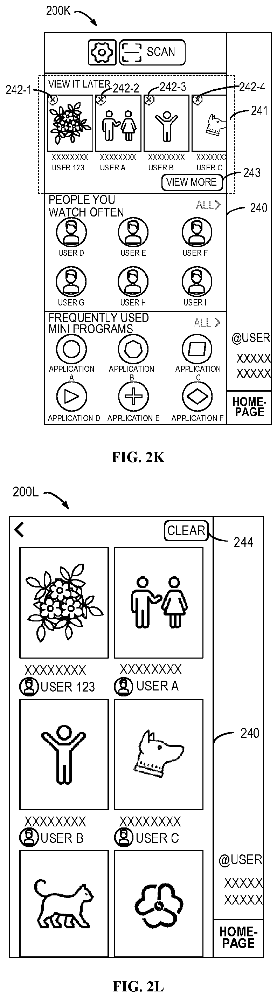

An example embodiment of accessing at least one media item marked as a target type via the entry control 202 is described below in connection with FIG. 2K- FIG.2N. In some embodiments, the terminal device 110 may present the example 200K as shown in FIG. 2K in response to receiving a third interaction operation (e.g., a click operation, a long-press operation, a double-click operation, etc.) for the entry control 202. Example 200K includes a sidebar 240. The sidebar 240 can be regarded as a sidebar of the left side of a recommendation homepage (i.e., the presentation page shown in example 200A to example 200J). The sidebar 240 includes a region 241. Indicators corresponding to at least part of media items of the at least one media item marked as the target type can be presented in region 241.

In some embodiments, the region 241 may further include a cancel control 242 (e.g., cancel control 242-1, 242-2, 242-3, 242-4, etc.) for canceling a mark of the target type of a target media item in the at least one media item. The indicator of each media item may correspond to a cancel control 242. The terminal device 110 may cancel the mark of the target type of the corresponding media item in response to receiving a click operation for a certain cancel control 242. For example, the terminal device 110 may cancel the mark of the target type of the corresponding media item (that is, the media item published by user 123) in response to receiving a click operation for the cancel control 242 -1.

In some embodiments, access control 243 is included in region 241. The terminal device 110 may present example 200L as shown in FIG. 2L in response to receiving a trigger operation for the access control 243. In example 200L, the sidebar 240 presents an indicator of at least one media item that is marked as the target type. In some embodiments, in a case where the indicator of the at least one media item cannot be all presented in the sidebar 240 at the same time, the terminal device 110 may present more indicators of media items in response to receiving a sliding operation (e.g., an upward sliding operation, a downward sliding operation, etc.) for the sidebar 240. In some embodiments, the terminal device 110 may also present a flush control 244 in the example 200L. The clear control 244 may be regarded as a cancel control for canceling a mark of the target type of all media items in the at least one media item. The terminal device 110 may cancel the marking of the target type of all the media items in the at least one media item in response to receiving a click operation for the clear control 244.

In some embodiments, region 241 may also be regarded as an access control for accessing at least one media item marked as a target type. In this case, an indicator of at least one media item marked as a target type may be directly presented in region 241. In this case, access control 243 may not be included in region 241. In the case where the indicator of the at least one media item cannot be all presented in the region 241 at the same time, the terminal device 110 may present more indicators of media items in response to receiving a sliding operation (e.g., a leftward sliding operation, a rightward sliding operation, etc.) for the region 241. In some embodiments, the terminal device 110 may determine the number of the at least one media item.

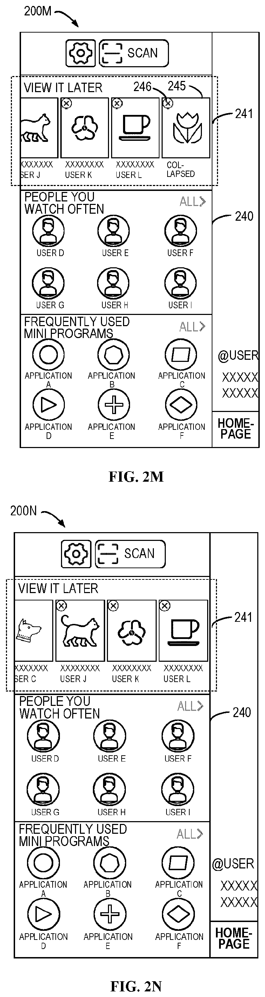

For example, as shown in FIG. 2M, if the number of the at least one media item is above than the predetermined threshold, the terminal device 110 may present, in the region 241, a first set of indicators of a first set of media items in the at least one media item. The number of media items in the first set of media items is equal to the predetermined threshold. The terminal device 110 may also present, in response to detecting a fifth interaction operation (e.g., a click operation, a double click operation, a long-press operation, etc.) for an indicator (i.e., the indicator 245) of a media item located at an end position in the first set of media items, a second set of indicators of a second set of media items after the first set of media items in the at least one media item. Terminal device 110 may, for example, present sidebar 240 as shown in FIG. 2L, and present a second set of indicators of a second set of media items after the first set of media items in the at least one media item in such sidebar 240.

In this case, the indicator 245 may be regarded as a collapsed indicator corresponding to a plurality of media items. In some embodiments, the terminal device 110 may delete a plurality of media items corresponding to the indicator 245 in response to receiving a click operation for a cancel control 246 corresponding to the indicator 245. That is, the terminal device 110 may delete a mark of the target type of the media item located at the end position in the first set of media items and a second set of indicators of a second set of media items after the first set of media items in the at least one media item. For example, the terminal device 110 may present example 200N shown in FIG. 2N, for example, in response to receiving a click operation for the cancel control 246 corresponding to the indicator 245. Terminal device 110 may present all media items in the first set of media items other than the media item previously located at an end location in region 241 of example 200N. For example, if the first set of media items includes 8 media items in total (that is, the predetermined threshold is 8), the terminal device 110 may present the first 7 media items in the region 241 of the example 200N.

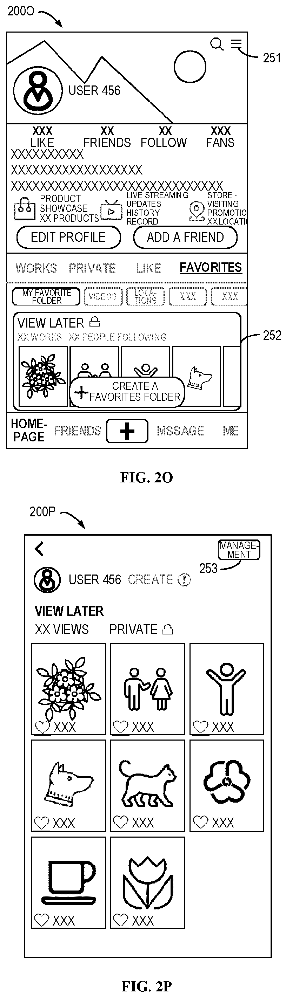

In some embodiments, in addition to the entry control 202, the terminal device 110 may also provide other entry controls for accessing media items. As shown in FIG. 2O, in some embodiments, the terminal device 110 may also provide an entry control 251 and an entry control 252 different from the entry control 202 for accessing a media item at a personal homepage (e.g., example 200O) of the user 140.

In some embodiments, the terminal device 110 may present the entry control 252 in the example 200O in response to the second interaction operation being a click operation for a predetermined control in the presentation page and the first interaction operation being a click operation associated with a predetermined region in the control. For example, referring to FIG. 2A to FIG. 2C, the terminal device 110 may determine, in response to receiving a click operation for the favorite control 201, and in response to receiving a click operation for the region 211, to mark a media item presented in the example 200A as a target type. The media item marked as the target type is presented in a favorites page.

The terminal device 110 may further present the favorites page in the personal homepage shown in the presentation example 200O. The favorites page includes an entry control 252. The entry control 252 may also be regarded as an access control for accessing at least one media item marked as a target type. The terminal device 110 may present the example 200P shown in FIG. 2P in response to receiving a click operation for the entry control 252. An indicator of at least one media item marked as a target type may be presented in example 200P. The example 200P includes a management control 253. The terminal device 110 may receive a management operation for the at least one media item in response to receiving a click operation for the management control 253. The management operation may include, for example, a deletion operation for the at least one media item. In this way, users may be supported to access and manage the marked media items in a more flexible manner.

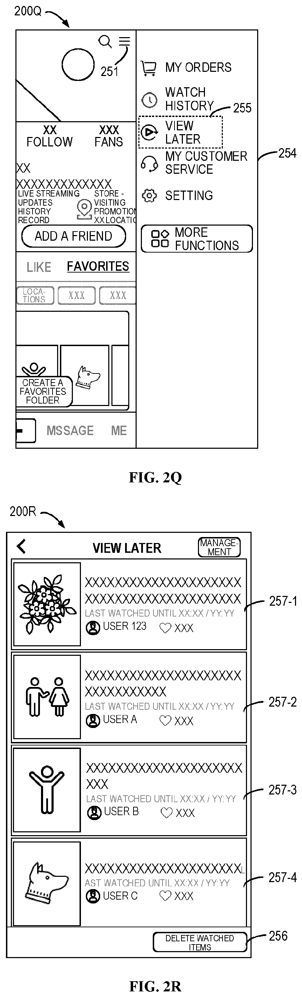

In some embodiments, the personal homepage shown in example 200O may include an entry control 251. The terminal device 110 may present example 200Q as shown in FIG. 2Q in response to receiving a click operation for the entry control 251. Example 200Q includes a sidebar 254. The sidebar 254 can be regarded as a sidebar of the right side of a personal homepage (i.e., the personal page shown in example 200O). The sidebar 254 includes an access control 255. The terminal device 110 may present the example 200R shown in FIG. 2R in response to detecting a click operation for the access control 255. An indicator of at least one media item marked as a target type may be presented in example 200R.

In some embodiments, in example 200R, the terminal device 110 may present at least one media item card 257 (e.g., media item cards 257 -1, 257 -2, 257 -3, 257 -4, etc.). The at least one media item card 257 may be regarded as an indicator of at least one media item marked as a target type. The presentation order of the at least one media item card in example 200R may be a chronological order in which at least one media item is marked as a target type. That is, the media item card corresponding to the media item marked as the target type later will be displayed higher up.

In some embodiments, the terminal device 110 may further present a playing progress of the corresponding media item in each of the media item card. For example, the terminal device 110 may present the playing progress "XX: XX/YY: YY" of the corresponding media item in the media item card 257 -1. For example, the terminal device 110 may play, in response to detecting a click operation for the media item card 257 -1, the media item corresponding to the media item card 257 -1 based on the corresponding playing progress. The example 200R may further include a cancel control 256 for canceling a mark of the target type of the target media item that has been played completely in the at least one media item. The terminal device 110 may cancel, in response to receiving a click operation for the cancel control 256, a mark of the target type of the target media item has been played completely in the at least one media item.

In some embodiments, in addition to via the entry control, the terminal device 110 may switch to presenting an indicator of the at least one media item (e.g., may switch to presenting the example 200K to the example 200R to facilitating user to view the indicator of the at least one media item via the corresponding operation) in response to receiving a click operation for the feedback (e.g., the feedback 204 or the feedback 205).

In summary, according to the embodiments of the present disclosure, a corresponding media item may be marked as the target type by a first interaction operation in a presentation page for presenting the media item. A guidance identification may also be presented in the presentation page. The guidance indicator may indicate an entry control for accessing a media item that is marked as a target type. Therefore, a media item can be conveniently and quickly marked. Related guidance information can be provided, which helps to improve the efficiency when a user is performing an interaction.

It should be understood that although a mark process is described above in a "view later" type as an example of a target type, alternatively and/or additionally, the media item may be marked as other types in a similar manner, such as a "like" type, a "favorite" type, and so forth. At this time, a guidance mark may be provided for pointing to entry controls of media items that are respectively marked "like" type and "favorite" type. In this way, explicit guidance information may be provided to the user, facilitating the user to quickly find the marked media item.

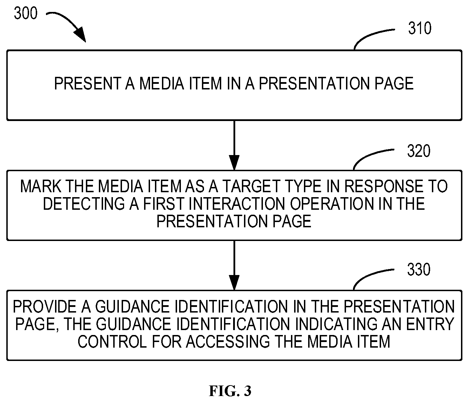

FIG. 3 illustrates a flowchart of a process 300 for marking a media item according to some embodiments of the present disclosure. Process 300 may be implemented at terminal device 110. The process 300 is described below with reference to FIG. 1.

At block 310, the terminal device 110 presents a media item in a presentation page.

At block 320, the terminal device 110 marks the media item as a target type in response to detecting a first interaction operation in the presentation page.

At block 330, the terminal device 110 provides a guidance identification in the presentation page. The guidance identification indicates an entry control for accessing the media item.

In some embodiments, the guidance identification includes at least one of the following: an image representation of the media item, and an indicator indicating the entry control.

In some embodiments, providing the guidance identification includes: presenting the guidance identification based on a predetermined path in the presentation page, an end position of the predetermined path corresponds to the entry control.

In some embodiments, the first interaction operation is an interaction operation for a control in the presentation page, the first interaction operation includes at least one of the following: a click operation and a drag operation associated with a predetermined region in the control.

In some embodiments, the control is presented in response to detecting a second interaction operation in the presentation page, the second interaction operation includes at least one of the following: a long-press operation in the presentation page, a click operation for a predetermined control in the presentation page, and a drag operation in the presentation page.

In some embodiments, the process 300 further includes: providing feedback indicating that the media item is marked as the target type. The feedback includes at least one of the following: visual feedback, auditory feedback, and haptic feedback.

In some embodiments, the first interaction operation is an interaction operation for a mark control in the presentation page, the mark control is configured to mark the media item as the target type, and the mark control is presented in response to determining that a length of time of the media item satisfies a predetermined threshold.

In some embodiments, the process 300 further includes: presenting, in response to detecting a third interaction operation for the entry control, an access control for accessing at least one media item marked as the target type; and presenting, in response to detecting a fourth interaction operation for the access control, an indicator of the at least one media item.

In some embodiments, presenting, in response to determining that the number of the at least one media item is above a predetermined threshold, a first set of indicators of a first set of media items in the at least one media item, the number of media items in the first set of media items being equal to the predetermined threshold; and presenting, in response to detecting a fifth interaction operation for an indicator of a media item located at an end position in the first set of media items, a second set of indicators of a second set of media items after the first set of media items in the at least one media item.

In some embodiments, the process 300 further includes: presenting a management control for managing the at least one media item. The management control includes at least one of the following: a cancel control for canceling a mark of the target type of a target media item in the at least one media item; a cancel control for canceling a mark of the target type of all media items in the at least one media item; and a cancel control for canceling a mark of the target type of the target media item that has been played completely in the at least one media item.

In some embodiments, an indicator of the at least one media item is presented in chronological order, and the process 300 further includes: presenting a playing progress of a target media item for the target media item in the at least one media item.

In some embodiments, the process 300 further includes: playing the target media item based on the playing progress in response to detecting a sixth interaction operation for an indicator of the target media item.

In some embodiments, the target type represents that a user performing the first interaction operation desires to access the media item again.

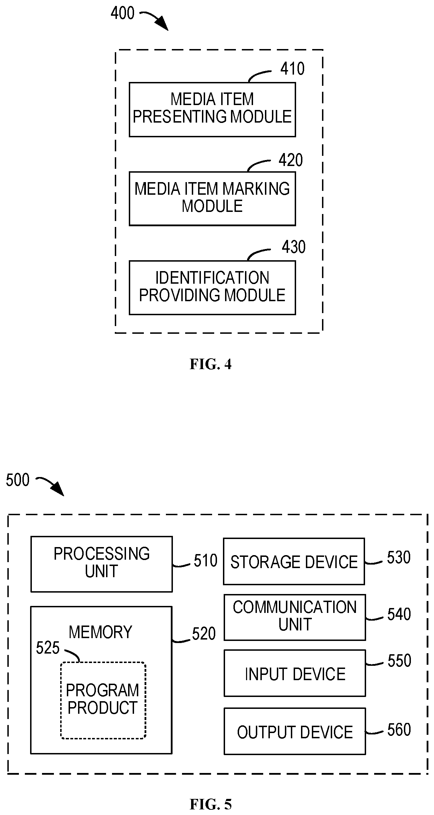

Embodiments of the present disclosure further provide a corresponding apparatus for implementing the above method or process. FIG. 4 illustrates a schematic structural block diagram of an apparatus 400 for marking a media item according to some embodiments of the present disclosure. The apparatus 400 may be implemented as the terminal device 110 or included in the terminal device 110. The various modules/components in the apparatus 400 may be implemented by hardware, software, firmware, or any combination thereof.

As shown in FIG. 4, the apparatus 400 includes a media item presenting module 410 configured to present the media item in a presentation page. The apparatus 400 further includes a media item marking module 420 configured to mark the media item as a target type in response to detecting a first interaction operation in the presentation page. The apparatus 400 further includes an identification providing module 430 configured to provide a guidance identification in the presentation page, the guidance identification indicating an entry control for accessing the media item.

In some embodiments, the guidance identification includes at least one of the following: an image representation of the media item, and an indicator indicating the entry control.

In some embodiments, the identification providing module 430 may be specifically configured to: present the guidance identification based on a predetermined path in the presentation page, an end position of the predetermined path corresponds to the entry control.

In some embodiments, the first interaction operation is an interaction operation for a control in the presentation page, the first interaction operation includes at least one of the following: a click operation and a drag operation associated with a predetermined region in the control.

In some embodiments, the control is presented in response to detecting a second interaction operation in the presentation page, the second interaction operation includes at least one of the following: a long-press operation in the presentation page, a click operation for a predetermined control in the presentation page, and a drag operation in the presentation page.

In some embodiments, the apparatus 400 further includes: a feedback providing module configured to provide feedback indicating that the media item is marked as the target type. The feedback includes at least one of the following: visual feedback, auditory feedback, and haptic feedback.

In some embodiments, the first interaction operation is an interaction operation for a mark control in the presentation page, the mark control is configured to mark the media item as the target type, and the mark control is presented in response to determining that a length of time of the media item satisfies a predetermined threshold.

In some embodiments, the apparatus 400 further includes: an access control providing module configured to present, in response to detecting a third interaction operation for the entry control, an access control for accessing at least one media item marked as the target type; and an indicator presenting module configured to present, in response to detecting a fourth interaction operation for the access control, an indicator of the at least one media item.

In some embodiments, the indicator presenting module includes: a presenting module of a first set of indicators configured to present, in response to determining that the number of the at least one media item is above a predetermined threshold, a first set of indicators of a first set of media items in the at least one media item, the number of media items in the first set of media items being equal to the predetermined threshold; and a presenting module of a second set of indicators configured to present, in response to detecting a fifth interaction operation for an indicator of a media item located at an end position in the first set of media items, a second set of indicators of a second set of media items after the first set of media items in the at least one media item.

In some embodiments, the apparatus 400 further includes: a management control presenting module configured to present a management control for managing the at least one media item. The management control includes at least one of the following: a cancel control for canceling a mark of the target type of a target media item in the at least one media item; a cancel control for canceling a mark of the target type of all media items in the at least one media item; and a cancel control for canceling a mark of the target type of the target media item that has been played completely in the at least one media item.

In some embodiments, an indicator of the at least one media item is presented in chronological order, and the apparatus 400 further includes: a presenting module of playing progress configured to present a playing progress of a target media item for the target media item in the at least one media item.

In some embodiments, the apparatus 400 further includes: a media item playing module configured to play the target media item based on the playing progress in response to detecting a sixth interaction operation for an indicator of the target media item.

In some embodiments, the target type represents that a user performing the first interaction operation desires to access the media item again.

The units/modules included in the apparatus 400 may be implemented in various manners, including software, hardware, firmware, or any combination thereof. In some embodiments, one or more units/modules may be implemented using software and/or firmware, such as machine-executable instructions stored on a storage medium. In addition to or as an alternative to machine-executable instructions, some or all of the units/modules in the apparatus 400 may be implemented, at least in part, by one or more hardware logic components. By way of example and not limitation, example types of hardware logic components that may be used include field programmable gate arrays (FPGAs), application specific integrated circuits (ASICs), application-specific standard product (ASSPs), system-on-chips (SOCs), complex programmable logic devices (CPLDs), and the like.

It should be understood that one or more steps of the above methods may be performed by a suitable electronic device or a combination of electronic devices. Such an electronic device or a combination of electronic devices may include, for example, the terminal device 110 in FIG. 1.

FIG. 5 illustrates a block diagram of an electronic device 500 in which one or more embodiments of the present disclosure may be implemented. It should be understood that the electronic device 500 illustrated in FIG. 5 is merely illustrative and should not constitute any limitation on the functionality and scope of the embodiments described herein. The electronic device 500 shown in FIG. 5 may be configured to implement the terminal device 110 of FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

The electronic device 500 typically includes a plurality of computer storage media. Such media may be any available media accessible by the electronic device 500, including, but not limited to, volatile and non-volatile media, removable and non-removable media. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. Storage device530 may be a removable or non-removable medium and may include a machine-readable medium, such as a flash drive, magnetic disk, or any other medium, which may be capable of storing information and/or data and may be accessed within electronic device 500.

The electronic device 500 may further include additional removable/non-removable, volatile/non-volatile storage media. Although not shown in FIG. 5, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media pages. The memory 520 may include a computer program product 525 having one or more program modules configured to perform various methods or actions of various embodiments of the present disclosure.

The communications unit 540 implements communications with other electronic devices over a communications medium. Additionally, the functionality of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, external devices such as storage devices, display devices, etc., communicate with one or more devices that enable a user to interact with the electronic device 500, or communicate with any device (e.g., a network card, a modem, etc. ) that enables the electronic device 500 to communicate with one or more other electronic devices. Such communication may be performed via an input/output (I/O) page (not shown).

According to example embodiments of the present disclosure, there is provided a computer-readable storage medium having computer-executable instructions stored thereon, where the computer-executable instructions are executed by a processor to implement the method described above. According to example embodiments of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatus to implement the functions/acts specified in the flowchart and/or block(s) in block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block(s) in block diagram.

The computer-readable program instructions may be loaded onto a computer, other programmable data processing apparatus, or other devices, such that a series of operational steps are performed on a computer, other programmable data processing apparatus, or other devices to produce a computer-implemented process such that the instructions executed on a computer, other programmable data processing apparatus, or other devices implement the functions/acts specified in the flowchart and/or block(s) in block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, the practical application, or improvements to the technology in the marketplace, or to enable others of ordinary skill in the art to understand the various embodiments disclosed herein.

## Claims

1. A method for marking a media item, comprising:
presenting the media item in a presentation page;
marking the media item as a target type in response to detecting a first interaction operation in the presentation page; and
providing a guidance identification in the presentation page, the guidance identification indicating an entry control for accessing the media item.

2. The method of claim 1, wherein the guidance identification comprises at least one of the following: an image representation of the media item, and an indicator indicating the entry control.

3. The method of claim 1, wherein providing the guidance identification comprises: presenting the guidance identification based on a predetermined path in the presentation page, an end position of the predetermined path corresponds to the entry control.

4. The method of claim 1, wherein the first interaction operation is an interaction operation for a control in the presentation page, the first interaction operation comprises at least one of the following: a click operation and a drag operation associated with a predetermined region in the control.

5. The method of claim 4, wherein the control is presented in response to detecting a second interaction operation in the presentation page, the second interaction operation comprises at least one of the following: a long-press operation in the presentation page, a click operation for a predetermined control in the presentation page, and a drag operation in the presentation page.

6. The method of claim 1, wherein the method further comprising: providing feedback indicating that the media item is marked as the target type, the feedback comprising at least one of the following: visual feedback, auditory feedback, and haptic feedback.

7. The method of claim 1, wherein the first interaction operation is an interaction operation for a mark control in the presentation page, the mark control is configured to mark the media item as the target type, and the mark control is presented in response to determining that a length of time of the media item satisfies a predetermined threshold.

8. The method of claim 1, further comprising:
presenting, in response to detecting a third interaction operation for the entry control, an access control for accessing at least one media item marked as the target type; and
presenting, in response to detecting a fourth interaction operation for the access control, an indicator of the at least one media item.

9. The method of claim 8, wherein presenting the indicator of the at least one media item comprises:
presenting, in response to determining that the number of the at least one media item is above a predetermined threshold, a first set of indicators of a first set of media items in the at least one media item, the number of media items in the first set of media items being equal to the predetermined threshold; and
presenting, in response to detecting a fifth interaction operation for an indicator of a media item located at an end position in the first set of media items, a second set of indicators of a second set of media items after the first set of media items in the at least one media item.

10. The method of claim 8, further comprising: presenting a management control for managing the at least one media item, the management control comprising at least one of the following:
a cancel control for canceling a mark of the target type of a target media item in the at least one media item;
a cancel control for canceling a mark of the target type of all media items in the at least one media item; and
a cancel control for canceling a mark of the target type of the target media item that has been played completely in the at least one media item.

11. The method of claim 8, wherein an indicator of the at least one media item is presented in chronological order, and the method further comprises: presenting a playing progress of a target media item for the target media item in the at least one media item.

12. The method of claim 11, further comprising: playing the target media item based on the playing progress in response to detecting a sixth interaction operation for an indicator of the target media item.

13. The method of claim 1, wherein the target type represents that a user performing the first interaction operation desires to access the media item again.

14. An apparatus for marking a media item, comprising:
a media item presenting module configured to present the media item in a presentation page;
a media item marking module configured to mark the media item as a target type in response to detecting a first interaction operation in the presentation page; and
an identification providing module configured to provide a guidance identification in the presentation page, the guidance identification indicating an entry control for accessing the media item.

15. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1-13.

16. A computer-readable storage medium, having a computer program stored thereon, the computer program being executable by a processor to implement the method of any of claims 1-13.
